Europäisches Patentamt

European Patent Office

Office européen des brevets

(11) Numéro de publication: **0 330 541 B1**

(12) **FASCICULE DE BREVET EUROPEEN**

(19)

(12)

(45) Date de publication de fascicule du brevet: **01.06.94**  (51) Int. Cl.⁵: **G01S 1/30**

(21) Numéro de dépôt: **89400372.2**

(22) Date de dépôt: **09.02.89**

(54) **Procédé et dispositif de radiolocalisation et leurs utilisations dans des systèmes de radiocommunication.**

(30) Priorité: **23.02.88 FR 8802128**

(43) Date de publication de la demande:
**30.08.89 Bulletin 89/35**

(45) Mention de la délivrance du brevet:
**01.06.94 Bulletin 94/22**

(84) Etats contractants désignés:
**DE ES GB IT**

(56) Documents cités:
**EP-A- 0 128 804**
**EP-A- 0 160 197**
**FR-A- 2 252 578**
**US-A- 3 553 697**
**US-A- 3 774 209**

**E. KRAMER: "FUNKSYSTEME FÜR ORTUNG UND NAVIGATION", und ihre Anwendung in der Verkehrssicherung, pages 46,47,52, Verlag Berliner Union GmbH,Stuttgart, DE**

(73) Titulaire: **THOMSON-CSF**
**173, Boulevard Haussmann**
**F-75008 Paris(FR)**

(72) Inventeur: **Charavit, Jean-Claude THOMSON-CSF SCPI**
**51, Esplanade du Général de Gaulle**
**F-92045 Paris la Défense CEDEX 67(FR)**

(74) Mandataire: **Lincot, Georges et al THOMSON-CSF,**
**SCPI,**
**B.P. 329,**
**50, rue Jean-Pierre Timbaud**
**F-92402 Courbevoie Cédex (FR)**

EP 0 330 541 B1

Rank Xerox (UK) Business Services
(3.10/3.09/3.3.3)

## Description

L'invention se rapporte à un procédé et à un dispositif de radiolocalisation et à leur utilisation dans des systèmes de radiocommunication.

Elle s'applique notamment, dans le domaine des communications militaires, à tous types de systèmes ou équipements de radiocommunication qu'ils soient à fréquence fixe ou protégés par dispersion d'énergie et sauts de fréquences.

Dans le domaine militaire les besoins de localisation coopérative sont différents selon qu'il s'agit de localiser des équipements radio pour obtenir une image générale du champ de bataille, d'assurer la coordination des actions, de fournir des appuis directs entre certains éléments de système d'arme ou encore de se diriger.

Lorsqu'il s'agit d'obtenir une représentation générale de la situation sur le champ de bataille, l'image recherchée doit être disponible dans les postes de commandement de haut niveau, par exemple, les postes de commandement de corps d'armée ou les postes de commandement de division. Dans ce cadre, la situation du champ de bataille doit être connue sur de grandes étendues, la zone couverte pouvant être par exemple de l'ordre de 200 kilomètres en profondeur et de 60 kilomètres en largeur, ce qui représente approximativement la zone qui est normalement tenue par une division. Il faut également pouvoir discerner des concentrations sur des zones de l'ordre de 10 à 50 kilomètres de rayon. Comme une division comporte généralement douze à quinze régiments de 1000 hommes chacun, et dispose d'environ de 170 réseaux de 10 postes chacun, il est impératif, dans ce cadre, de pouvoir localiser les chefs de réseau avec une précision sur le terrain qui est de l'ordre de 1 kilomètre en ayant également la possibilité de mettre à jour la position de chaque chef de réseau de manière assez rapide en des laps de temps compris entre 1 à 10 minutes. En ce qui concerne la coordination des actions celle-ci doit se faire sans interférence entre les éléments du réseau. Dans ces conditions l'enchaînement ordonné des actions nécessite à la fois que soit connu par l'ensemble des éléments du réseau le référentiel à la fois temporel et spatial servant de point de départ pour toutes les actions entreprises dans le réseau. A cela il faut ajouter les possibilités de corréler les pistes locales aux informations d'alerte afin de disposer d'un système d'alerte efficace et de la possibilité d'assister les unités pour faire le point et déterminer les cheminements à effectuer. Pour cet ensemble de besoins, la précision de localisation nécessaire est alors de l'ordre de 100 mètres avec des temps de mise à jour de l'information de l'ordre de la minute.

Dans le cadre de l'appui direct le transfert d'informations entre par exemple un dispositif de désignation d'objectif et l'unité de tir correspondante est très variable, elle peut correspondre pour les canons sol air à des transmissions sur une distance d'environ 100 mètres avec une précision de quelques mètres ou dans le cadre de l'artillerie à des transmissions sur une distance de 30 kilomètres avec une précision de quelques mètres.

A l'ensemble des besoins précités s'ajoutent d'autres besoins plus militaires qui sont par exemple la minimisation des signatures des émissions spéficiques, l'observation du silence radio pendant de longues périodes pouvant aller de quelques heures à quelques journées, la protection contre l'adversaire qui ne doit pas pouvoir exploiter le système à ses fins propres ainsi que d'autres fonctions spécifiques nécessaires à certains types de véhicules comme les hélicoptères, par exemple, pour lesquels il est nécessaire de donner une fonction de guidage avec une précision de l'ordre de 10 à 100 mètres en fonction de la vitesse entre, par exemple, 0 et 250 kilomètres/heure.

Des préoccupations du même ordre existent également dans les domaines civils du radiotéléphone et de la navigation aérienne. Au moyen de radiotéléphones il peut être intéressant de pouvoir localiser, des mobiles évoluant par exemple sur des zones désertiques ou encore des navires situés à proximités des côtes. De façon similaire, il est intéressant en aviation civile de disposer de moyens de localisation radio suffisamment compacts pour équiper des avions de tourismes pour éviter des collisions avec les avions de transports en donnant à ces derniers le rôle de balises.

Les systèmes de communications connus, disposant de fonction de radiolocalisation, permettent généralement par des mesures de distance la reconnaissance de la position d'un mobile à la surface de la terre. Ces systèmes qui sont pour la plupart décrits dans le livre intitulé "radionavigation, radiolocalisation" pages 188 à 246 de M. FOMBONE édité par la Société MASSON Paris et dont un exemple de radiophare est par exemple décrit dans la demande de brevet FR 2 252 578, trouvent leurs applications en aéronautique civile et militaire ainsi que dans le domaine spatial pour déterminer la position des sondes spatiales ou des satellites.

Les récents développements en matière de radionavigation ont conduit aux réalisations françaises et américaines plus connues respectivement sous les désignations SINTAC et JTIDS qui sont les abréviations de "systèmes intégrés de navigation de télécommunication et d'autocollision" et de "joints technical informations distributions systemes''.

L'utilisation pour la localisation des éléments d'un corps d'armée, de mobiles munis de radiotéléphones ou comme système d'anticollision pour l'aviation civile n'est pas réalisable sans une refonte totale des dispositifs de radiocommunication existants et sans que soit repensé les allocations de fréquences établies. D'autre part, appliqué au problème de la radiolocalisation du champ de bataille, ces systèmes qui effectuent des mesures de distance par interrogations et réponses entre des balises et les mobiles ou utilisent des faisceaux tournants rendent extrêmement vulnérables ces derniers qui se dévoilent à l'adversaire en rompant le silence radio à chaque mesure de distance effective.

Le but de l'invention est de pallier les inconvénients précités en permettant notamment de rendre exploitable les systèmes de radiolocalisation en évasion de fréquence.

A cet effet, l'invention a pour objet, un procédé de radiolocalisation de récepteurs $P_j$ par rapport à une pluralité de stations radio émettrices $ST_i$ alimentant chacune une pluralité d'antennes $A_k$ par détermination des angles d'arrivée sur le récepteur des ondes émises par une station émettrice, dans lequel chaque station émettrice émet un signal, à fréquence fixe ou sur un palier à fréquence fixe, successivement sur chacune de ses antennes $A_k$, et chaque récepteur mesure les phases relatives des signaux reçus qui sont émis successivement sur chaque antenne d'une station $ST_i$ pour calculer à partir des phases relatives mesurées l'angle d'arrivée $\theta_i$ des ondes électromagnétiques de la station $ST_i$, caractérisé en ce que la position géographique d'un récepteur $P_j$ est déterminée automatiquement dans le récepteur, à partir d'au moins deux directions calculées d'angles d'arrivée des ondes électromagnétiques provenant d'au moins deux stations $ST_i$ et par un calcul de triangulation à partir de la position géographique de chaque station $ST_i$ transmises dans une trame de message à destination des récepteurs et des directions des angles d'arrivée des ondes électromagnétiques calculées.

L'invention a également pour objet un dispositif et un système pour la mise en oeuvre du procédé précité.

D'autres caractéristiques et avantages de l'invention apparaîtront ci-après à l'aide de la description qui suit faite en regard des dessins annexés qui représentent :

La figure 1, un schéma d'articulation d'un système de radiolocalisation selon l'invention ;

La figure 2 le mode de repérage adopté par l'invention pour référencer un récepteur par rapport à une station émettrice ;

La figure 3 un mode de transmission de données entre une station et un récepteur utilisé par l'invention ;

La figure 4 un schéma pour expliquer le procédé de mise en oeuvre par l'invention pour déterminer la direction d'arrivée des ondes provenant d'une station émettrice ;

La figure 5 le procédé de l'invention sous la forme un organigramme pour déterminer l'angle d'arrivée d'une onde provenant d'une station émettrice ;

la figure 6 un mode de réalisation d'un récepteur selon l'invention ;

La figure 7 un mode de réalisation d'une station émettrice selon l'invention.

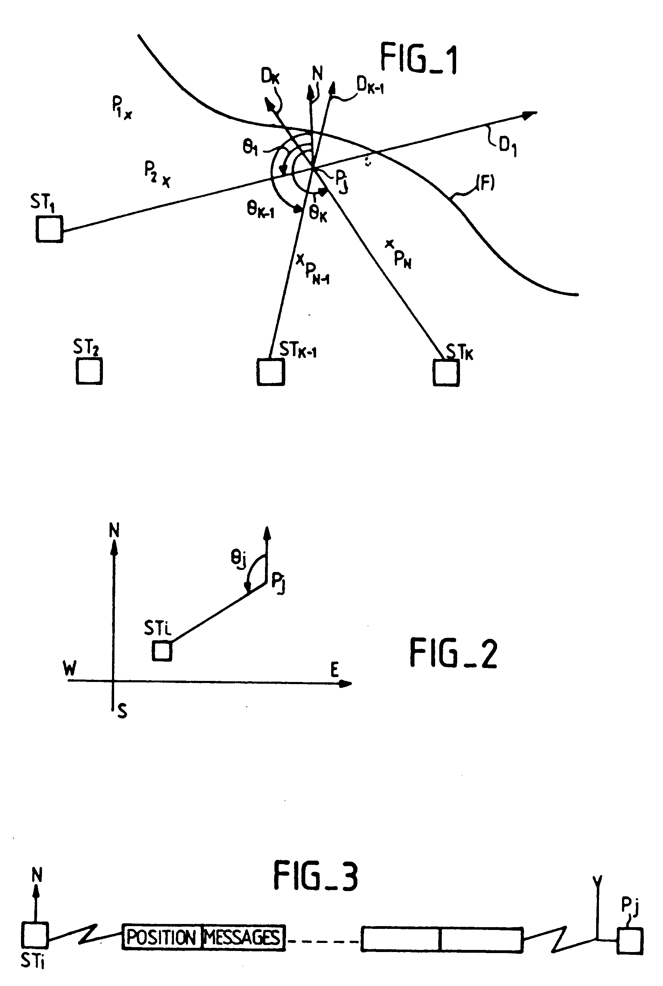

Le schéma de la figure 1 représente un système de radiolocalisation selon l'invention d'éléments d'un corps d'armée, placés sur le terrain en face d'une ligne de front F. Le système comprend un ensemble de postes radio tactiques $P_1$ à $P_N$ et un ensemble de stations spécialisées ou balises $ST_1$ à $ST_K$ permettant la localisation de la position des postes radio tactiques placés devant la ligne de front F.

La position géographique d'un poste, est obtenue par triangulation à partir de la position connue de chaque station $ST_i$ dans le système des coordonnées Nord-Sud et Est-Ouest des cartes d'état major par exemple, comme cela est représenté aux figures 1 et 2.

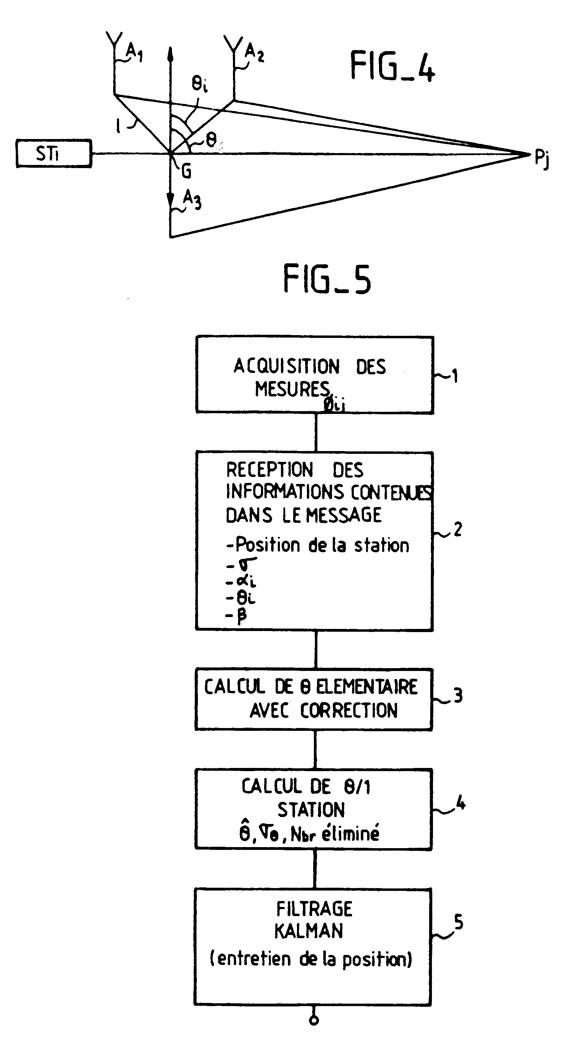

Pour *ce* faire, les stations spécialisées $ST_1$ à $ST_K$ émettent périodiquement de la façon représentée à la figure 3 des messages spéciaux indiquant leurs positions et éventuellement un certain nombre d'informations complémentaires. Ces messages sont reçus par les postes $P_1$ à $P_N$. Un dispositif complémentaire inséré dans chaque poste réalise une suite de mesures permettant de déterminer les directions $\theta i$ des stations émettrices.

Ainsi sur la figure 1 est figuré un poste tactique $P_1$ qui reçoit simultanément de trois stations émettrices $ST_1$, $ST_{K-1}$ et $ST_K$ des messages provenant des directions notées respectivement $D_1$, $D_{K-1}$ et $D_K$ avec les azimuths respectifs $\theta_1$, $\theta_{K-1}$ et $\theta_K$. Les informations reçues par le poste tactique $P_j$ sont exploitées par le dispositif complémentaire du poste qui détermine au moyen d'un logiciel approprié la position du poste radio et la précision obtenue. Selon le procédé de localisation mis en oeuvre par l'invention, la localisation de chaque poste radio par rapport aux stations $ST_1$ à $ST_K$ peut être obtenue en plein silence radio.

Le principe de la mesure est décrit ci-après à l'aide du schéma représenté à la figure 4 qui représente une station émettrice $ST_1$ couplée à un aérien comportant plusieurs antennes $A_1$, $A_2$ et $A_3$ qui émettent en direction d'un poste radio tactique $P_j$. Le principe de la mesure retenue consiste à inverser la mesure classique interférométrique effectuée dans les radiogoniomètres. Pendant la mesure, le poste radio $P_j$

3

détecte les ondes de même fréquence qu'il reçoit successivement des antennes $A_1$, $A_2$ et $A_N$. Dans le cadre de la figure 4, l'aérien est formé de 3 antennes $A_1$, $A_2$ et $A_3$ mais le principe de l'invention reste valable pour des aériens munis d'un nombre N d'antennes quelconque pourvu que N soit supérieur ou égal à 2. L'aérien est organisé à la manière d'une base interférométrique. De ce fait, comme les distances qui séparent chaque aérien d'un poste radio $P_j$ sont différentes, cette configuration produit des différences de marches des ondes radio émises successivement par chaque antenne qui sont la cause de déphasages entre les ondes reçues par le poste de radio $P_j$. La mesure de ces déphasages permet de calculer la direction $\theta$ d'arrivée des ondes radio sur le poste $P_j$.

Le calcul montre qu'en première approximation l'angle $\theta$ peut être obtenu par la résolution d'un système N-1 équations du type :

$$2l \times \sin((\theta_i-\theta_j)\times \tfrac{1}{2})\times \sin(\theta + (\theta_i+\theta_j)\times \tfrac{1}{2}) = C \times (2\pi f)^{-1} \times((\phi_i - \phi_j) + 2k_{ij}.\pi) + \alpha_i - \alpha_j) \qquad (1)$$

où : N représente le nombre d'antennes ; ce nombre pouvant être fixé à 4 pour un véhicule par exemple,
- $\theta$ le relèvement du poste radio $P_j$ par rapport au système d'antennes
- $\phi_i$ représente les mesures de phase réalisées sur l'antenne i
- f est la fréquence d'émission
- $\alpha_i$ sont des fonctions de calibration (fonction de f et de $\theta$)
- C est la vitesse de la lumière
- l est la distance moyenne entre une antenne $A_i$ et le point central G de l'aérien
- $k_{ij}$ est un nombre entier égal en général à +1, 0 ou
- 1 lorsque le système d'antennes émet en VHF et lorsque la distance moyenne l est comprise entre 1 et 2 mètres.

Les fonctions de calibration , $\alpha_i$, sont destinées à compenser les biais et les imperfections des matériels ou équipements constituant le système de radiolocalisation. Elles dépendent fortement des technologies et méthodes de réalisation utilisées.

Leur détermination peut être obtenue expérimentalement pour une famille de matériel donné, par la méthode suivante, consistant à :
- relever de façon expérimentale les erreurs en fonction de $\theta$ et f pour un lot de matériels (10 à 20) ;
- déterminer la meilleure approximation fonctionnelle, en appliquant une ou plusieurs des méthodes connues sous les désignations : Legendre, Chebyshev, Jacobi, Bernouilli, ... Fourrier..) ; et enfin à déterminer pour chaque équipement des coefficients relatifs à l'approximation fonctionnelle choisie.

Les coefficients obtenus sont transmis dans les messages des balises.

Lorsque plusieurs équipements de conception différentes sont utilisés au sein d'un même système, ceux-ci donnent lieu à différentes approximations fonctionnelles. Pour tenir compte de ce fait les messages des balises devront comporter l'indication de l'approximation utilisable.

La résolution du système d'équations donne une ou deux paires de solutions suivant les cas. Mais les indéterminations peuvent être facilement levées en considérant les N-1 équations ainsi que les autres mesures réalisées à d'autres fréquences.

Une valeur estimée plus précise est déterminée en faisant la moyenne des valeurs retenues et en les pondérant en fonction de leur précision qui est déterminable par le calcul. En effet la précision $d\theta$ obtenue est de la forme :

$$d\theta = d\theta_1 + d\theta_2 + d\theta_3 + d\theta_4 \qquad (2)$$

$$\text{avec } d\theta_1 = 2^{-3/2} \times d\theta_i \qquad (3)$$

$$d\theta_2 = (2\times l)^{-1} \times 2^{1/2} \times d\alpha_i \qquad (4)$$

$$d\theta_3 = C \times (2 \times \pi \times f)^{-1} \times 2^{-1/2} \times d\theta_i \qquad (5)$$

$$d\theta_4 = C \times (2 \times \pi \times f \times l)^{-1} \times 2^{-\frac{1}{2}} \times d\phi \qquad (6)$$

En supposant les antennes séparées du point central G de la base interférométrique d'une distance l = 1 mètre les relations (3) à (6) donnent les précisions suivantes :
$d\theta_1 \simeq d\theta_2 \simeq 10^{-3}$ radians, $d\theta_3$ est négligeable et $d\theta_4$ apparaît comme le seul paramètre important.

En admettant que les phases $\phi$ peuvent être mesurées avec une précision $1° < d\phi < 2°$ la relation (6) donne $d\theta_4 = 0,2°$ pour une fréquence $f = 80$ MHz et $d\theta_4 = 1°$ pour une fréquence $f = 20$ MHz.

Pour parfaire la précision, les mesures précédentes sont réalisées sur plusieurs fréquences. Ces mesures sont nécessaires pour lever les indéterminations, et surtout se prémunir contre les multi-trajets et améliorer la précision. De ce fait, chaque poste récepteur $P_j$ est programmé pour, déterminer la cohérence des mesures en effectuant une analyse de dispersion, éliminer les mesures aberrantes, et calculer la valeur estimée en effectuant une moyenne des mesures restantes ainsi que la variance de cette évaluation. Cette disposition améliore la précision et permet de déterminer les cas de fortes présences de multi-trajets. Dans ce dernier cas la mesure n'est pas prise en compte par la suite.

Dans le cas de poste de communication protégé par sauts de fréquences, la commutation entre les antennes se réalise sur un seul palier, le changement de fréquence étant inhérant au système de protection. La forme d'onde générale du système de communication n'est pas modifiée afin de ne pas "marquer" le signal ou tout au moins de minimiser la signature radioélectrique. Ce système de localisation est ainsi en fait protégé de la même manière que le système de communication.

La position du poste radio $P_j$ est déterminée en exploitant les mesures réalisées sur plusieurs stations spécialisées, au moyen d'un filtre connu de Kalman, du type de ceux déjà utilisés par exemple dans les systèmes SINTAC précités, ou du type de ceux décrits dans le livre intitulé "Le filtrage et ses applications" de M. LABARRERE, JP KRIEF et B. GIMONET de la collection de l'école nationale supérieure de l'aéronautique et de l'espace (France) et publié aux éditions CEPADUES pages 197-250.

L'utilisation d'un filtre de Kalman a pour avantages qu'il permet :
- de réaliser une estimation à variance minimale au cas où les hypothèses de normalité sont vérifiées, ce qui est dans le cadre de l'invention pratiquement toujours réalisée,
- de calculer la précision de l'estimation,
- d'exploiter des mesures complémentaires, notamment en exploitant la connaissance approximative de la position,
- d'effectuer des calculs que le poste radio, soit en position fixe ou en déplacement sur un véhicule par exemple,
- de tester la vraissemblance des mesures et ne pas tenir compte d'informations en cas de test négatif,
- et enfin d'exploiter les informations une par une.

Le filtre de Kalman fournit la position estimée, sa précision, le nombre de stations reçues correctement, la vitesse et le cap estimés avec leur précision et enfin la direction par rapport à une position mémorisée. Ces informations sont obtenues à partir de la mesure de l'angle de relèvement, de la qualité de la mesure représentée par l'écart type calculé sur des mesures élémentaires et enfin du degré de confiance que l'on peut attribuer aux mesures. Il reçoit également des informations relatives à chacune des stations émettrices qui sont sa position, son numéro, l'orientation de son système d'antennes par rapport au nord géographique, les paramètres de calibration, la précision de la position de la station et enfin le temps restant avant la fin de liaison. D'autre part, il reçoit des informations complémentaires comme : la position estimée avec son incertitude, la vitesse de déplacement estimée du poste, des informations en provenance d'autres moyens d'aide à la localisation.

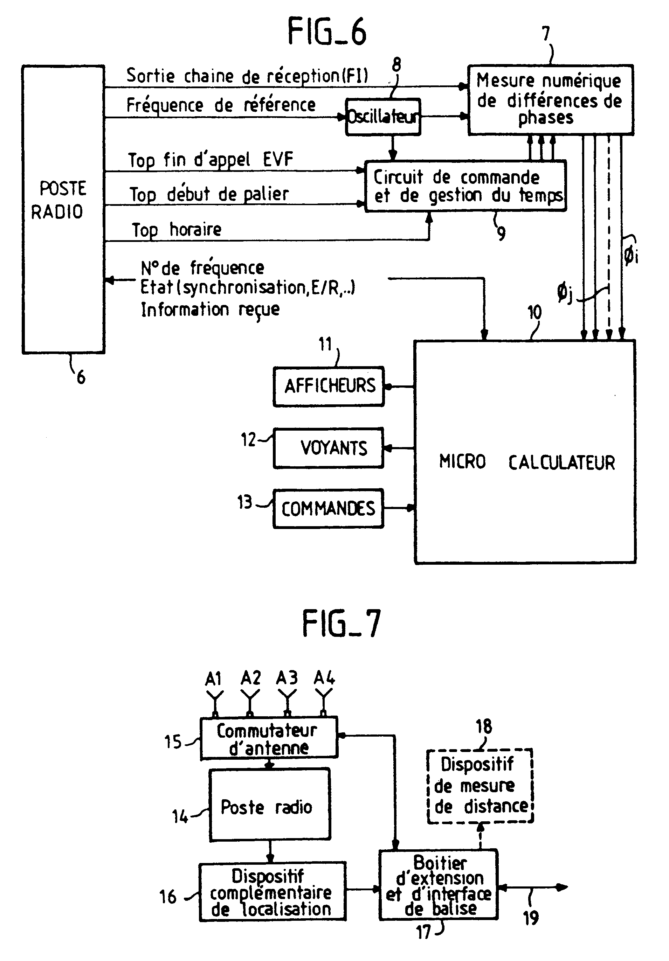

Les traitements à effectuer sont figurés par les étapes 1 à 5 de l'organigramme représenté à la figure 5. L'étape 1 consiste à effectuer l'acquisition des mesures de phase $\phi_{ij}$. Ces mesures sont exploitées à l'étape 2 en tenant compte des informations contenues dans le message qui est reçu par le poste radio. Ces informations renseignent sur la position de la station, la précision de cette position ($\sigma$) des paramètres des fonctions de calibration $\alpha i$, l'angle de repérage $\theta_i$ de chacune des antennes de la station, et l'alignement $\beta$ de la station par rapport au nord géographique. En fonction de ces informations, le poste de radio calcule l'angle élémentaire $\theta$ par la relation (1) décrite précédemment, puis calcule à l'étape 4 une valeur de prédiction de l'angle $\theta$, une valeur d'écart type $\sigma\,\theta$ de l'angle $\hat{\theta}$ et le nombre de valeurs éliminées. Les valeurs de la prédiction de l'angle $\theta$ calculées et de l'écart type $\sigma\,\theta$ sont appliquées au filtre de Kalman à l'étape 5 pour entretenir la position des postes radio à chaque nouvelle réception des messages.

Un mode de réalisation d'un poste radio permettant la mise en oeuvre du procédé selon l'invention est représenté à la figure 6. Ce récepteur comprend représenté en 6 les fonctions habituelles connues des postes radio tactiques. A ces fonctions s'ajoutent des éléments spécifiques permettant la réalisation du procédé selon l'invention. Ces éléments spécifiques comprennent un dispositif de mesure numérique de différence de phase 7, un oscillateur contrôlé en tension 8, un circuit de commande et de gestion de temps 9. L'ensemble des éléments 7, 8 et 9 est commandé par un microcalculateur 10, ce dernier étant relié à un dispositif d'affichage 11, un dispositif de visualisation 12 et à des moyens de commande 13.

Le dispositif de calcul de différence de phase 7 effectue des comparaisons de phase entre le signal à fréquence intermédiaire du poste de radio 6 et un signal de référence fourni par l'oscillateur commandé en tension 8. Les différences de phase mesurées $\phi_i$, de chaque signal reçu d'une antenne d'émission $A_1$ à $A_N$ d'une station, mesurées par le dispositif de calcul de différence de phase 7, sont appliquées au microcalculateur 10, sous la commande du circuit de commande et de gestion 9. Ce dernier réagit en fonction de signaux spécifiques contenus dans les trames des messages et fournis par le poste de radio 6, tels que les tops de fin d'acquisition de message et/ou les tops de début de palier et/ou encore les tops horaires. Enfin le poste radio fournit au microcalculateur 10 des informations comme : le numéro de fréquence, l'état du poste tel que sa synchronisation ou son état d'émission ou de réception ainsi que des informations relatives aux trames de messages reçus. Le microcalculateur 10 effectue les calculs des directions des ondes d'arrivée $\theta_i$ conformément aux étapes de traitement représentées à la figure 5.

Un schéma synoptique représentatif des éléments constitutifs d'une station est représenté à la figure 7. La station comprend un poste de radio 14 couplé au travers d'un commutateur 15 à un ensemble d'aériens composés dans l'exemple, de 4 antennes $A_1$, $A_2$; $A_3$ et $A_4$. Le poste 14 est d'autre part couplé à un dispositif complémentaire de localisation 16 comprenant par exemple un télémètre laser. Le commutateur 15 et le dispositif complémentaire de localisation sont couplés à un boîtier 17 d'extension et d'interface de balise. Ce boîtier est éventuellement relié à un dispositif 18 de mesure de distance. Le dispositif complémentaire de localisation 16 comprend également un microcalculateur non représenté pour permettre l'exécution d'un logiciel adapté aux fonctions nécessaires au fonctionnement en balise de chacune des stations d'émission. Ce logiciel est inscrit dans une mémoire de programme non représentée, contenue dans le boîtier d'extension et d'interface 17. Le boîtier 17 permet au moyen d'un bus d'interface 19 de connecter la station vers d'autres systèmes non représentés.

L'organisation des transmissions entre station $ST_i$ et poste radio $P_j$ doit tenir compte de la nature des matériels mis en oeuvre dans le système de radiolocalisation. Cependant de façon générale, il est préférable d'organiser les transmissions suivant le mode connu de partage de temps (AMRT). Dans ce cas deux procédures peuvent être utilisées, l'une consistant à allouer les périodes d'émission par le centre de commandement et la deuxième consistant en une méthode d'émission par contention. Dans les deux cas, le temps est partagé en récurrences qui peuvent être assez grandes et qui peuvent aller de quelques millisecondes à quelques secondes suivant l'organisation et les performances du système de communication support, la période système pouvant être définie par exemple par une suite de périodes élémentaires de 5 à 20 récurrences. Dans la méthode d'allocation figée, les récurrences sont réparties entre les stations spécialisées par le commandement de manière à éviter l'utilisation d'une même récurrence dans deux stations proches. Par contre, dans la méthode par contention, chaque station choisit aléatoirement une récurrence d'émission parmi les récurrences d'un cycle. Ainsi il peut y avoir certaines configuration de brouillages intrinsèques mais qui ne se reproduisent qu'aléatoirement sans incidence sur le système. De plus cette seconde méthode ne nécessite pas de coordination.

**Revendications**

1. Procédé de radiolocalisation de récepteurs $P_j$ par rapport à une pluralité de stations radio émettrices $ST_i$ alimentant chacune une pluralité d'antennes $A_k$ par détermination des angles d'arrivée sur le récepteur des ondes émises par une station émettrice, dans lequel chaque station émettrice émet un signal, à fréquence fixe ou sur un palier à fréquence fixe, successivement sur chacune de ses antennes $A_k$, et chaque récepteur mesure les phases relatives des signaux reçus qui sont émis successivement sur chaque antenne d'une station $ST_i$ pour calculer à partir des phases relatives mesurées l'angle d'arrivée $\theta_i$ des ondes électromagnétiques de la station $ST_i$ caractérisé en ce que la position géographique d'un récepteur $P_j$ est déterminée automatiquement dans le récepteur, à partir d'au moins deux directions calculées d'angles d'arrivée des ondes électromagnétiques provenant d'au moins deux stations $ST_i$ et par un calcul de triangulation à partir de la position géographique de chaque station $ST_i$ transmise dans une trame de message à destination des récepteurs et des directions des angles d'arrivée des ondes électromagnétiques calculées.

2. Procédé selon la revendication 1 caractérisé ence que le signal émis successivement sur chaque antenne $A_k$ d'une station est émis plusieurs fois avec des fréquences différentes.

3. Procédé selon l'une quelconque des revendications 1 à 2, caractérisé en ce que la position de chaque récepteur est estimée au moyen d'un filtre de Kalman à partir de la détermination des angles d'arrivée des ondes électromagnétiques reçues de chaque station $ST_i$.

**4.** Dispositif pour la mise en oeuvre du procédé selon l'une quelconque des revendications 1 à 3, caractérisé en ce que chaque récepteur $P_j$ comprend un dispositif de mesure numérique de différence de phase (7) pour comparer les phases des signaux reçus successivement des antennes d'une station, et un microcalculateur (10) couplé au dispositif de mesure numérique de différence de phase (7) pour calculer les angles d'arrivée des ondes émises par chaque station et déterminer la position géographique du récepteur.

**5.** Dispositif selon la revendication 4, caractérisé en ce que chaque station $ST_i$ comprend un poste émetteur radio (14) couplé au travers d'un commutateur (15) à une base interférométrique comportant plusieurs antennes $A_k$.

**6.** Utilisation du procédé et du dispositif selon l'une quelconque des revendications 1 à 5 à la localisation de postes tactiques de télécommunication sur le terrain, la localisation du poste pouvant être obtenue pendant le silence radio du poste.

**7.** Utilisation du procédé et du dispositif selon l'une quelconque des revendications 1 à 5 dans un système de radiocommunication protégé dans lequel les signaux spécifiques nécessaires à la localisation des postes radios sont transmis en évasion de fréquence pour les rendre distincts des signaux généraux de communications.

**8.** Utilisation du procédé et du dispositif selon l'une quelconque des revendications 1 à 5, à la localisation des radiotéléphones.

**9.** Utilisation du procédé selon l'une quelconque des revendications 1 à 5 , à la réalisation de systèmes anticollisions pour aéronefs.

**Claims**

**1.** Method of radio position fixing of receivers $P_j$ with respect to a plurality of transmitting radio stations $ST_i$ each feeding a plurality of antennae $A_k$ by determining the angles of arrival on the receiver of the waves transmitted by a transmitting station, in which each transmitting station transmits a signal, at fixed frequency or over a fixed frequency step, successively on each of its antennae $A_k$, and each receiver measures the relative phases of the signals received which are transmitted successively on each antenna of a station $ST_i$ in order, on the basis of the measured relative phases, to calculate the angle of arrival $\theta_i$ of the electromagnetic waves from the station $ST_i$, characterized in that the geographical position of a receiver $P_j$ is determined automatically in the receiver, on the basis of at least two calculated directions of angles of arrival of the electromagnetic waves originating from at least two stations $ST_i$ and by a triangulation calculation on the basis of the geographical position of each station $ST_i$ transmitted in a message frame intended for the receivers and of the directions of the angles of arrival of the electromagnetic waves which are calculated.

**2.** Method according to Claim 1, characterized in that the signal transmitted successively on each antenna $A_k$ of a station is transmitted several times with different frequencies.

**3.** Method according to either of Claims 1 or 2, characterized in that the position of each receiver is estimated by means of a Kalman filter on the basis of the determination of the angles of arrival of the electromagnetic waves received from each station $ST_i$.

**4.** Apparatus for implementing the method according to any one of Claims 1 to 3, characterized in that each receiver $P_j$ comprises an apparatus for digital measurement of the phase difference (7) in order to compare the phases of the signals received successively from the antennae of a station, and a microcomputer (10) coupled to the digital phase difference measuring apparatus (7) for calculating the angles of arrival of the waves transmitted by each station and determining the geographical position of the receiver.

**5.** Apparatus according to Claim 4, characterized in that each station $ST_i$ comprises a radio transmitter set (14) coupled through a changeover switch (15) to an interferometric base including several antennae $A_k$.

EP 0 330 541 B1

**6.** Use of the method and of the apparatus according to any one of Claims 1 to 5 for position fixing of tactical telecommunication sets on the ground, the position fixing of the set possibly being obtained during radio silence by the set.

**7.** Use of the method and of the apparatus according to any one of Claims 1 to 5 in a protected radiocommunication system in which the specific signals necessary for position fixing of the radio sets are transmitted in frequency evasion mode in order to render them distinct from the general communications signals.

**8.** Use of the method and of the apparatus according to any one of Claims 1 to 5, for position fixing of radiotelephones.

**9.** Use of the method according to any one of Claims 1 to 5, for producing anti-collision systems for aircraft.

**Patentansprüche**

**1.** Verfahren zur Funkortung von Empfängern $P_j$ bezüglich einer Mehrzahl von Funksendestationen $ST_i$, die je eine Mehrzahl von Antennen $A_k$ speisen, durch Bestimmung der Winkel, unter denen der Empfänger von einer Sendestation ausgesendete Wellen empfängt, wobei jede Sendestation ein Signal mit fester Frequenz oder auf einer festen Frequenzstufe nacheinander über jede ihrer Antennen $A_k$ aussendet und jeder Empfänger die relativen Phasen der empfangenen Signale mißt, die nacheinander von jeder Antenne einer Station $ST_i$ ausgesendet wurden, um aus den gemessenen relativen Phasen den Winkel $\theta_i$ zu berechnen, unter dem die elektromagnetischen Wellen von der Station $ST_i$ angekommen sind, dadurch gekennzeichnet, daß die geographische Position eines Empfängers $P_j$ im Empfänger ausgehend von mindestens zwei berechneten Richtungen der Winkel der von mindestens zwei Stationen $ST_i$ ankommenden elektromagnetischen Wellen und durch eine trigonometrische Berechnung ausgehend von der in einem Nachrichtenrahmen für die Empfänger übertragenen geographischen Position jeder Station $ST_i$ und den berechneten Richtungen der Ankunftswinkel der elektromagnetischen Wellen automatisch bestimmt wird.

**2.** Verfahren nach Anspruch 1, dadurch gekennzeichnet, daß das über jede Antenne $A_k$ einer Station nacheinander ausgesendete Signal mehrfach mit unterschiedlichen Frequenzen ausgesendet wird.

**3.** Verfahren nach einem beliebigen der Ansprüche 1 und 2, dadurch gekennzeichnet, daß die Position jedes Empfängers mit Hilfe eines Kalman-Filters ausgehend von der Bestimmung der Ankunftswinkel der in jeder Station $ST_i$ empfangenen elektromagnetischen Wellen geschätzt wird.

**4.** Vorrichtung zur Durchführung des Verfahrens nach einem beliebigen der Ansprüche 1 bis 3, dadurch gekennzeichnet, daß jeder Empfänger $P_j$ eine Vorrichtung (7) zur digitalen Messung der Phasendifferenz, die die Phasen der nacheinander von den Antennen einer Station empfangenen Signale vergleicht, und einen Mikrorechner (10) enthält, der an die Vorrichtung (7) zur digitalen Messung der Phasendifferenz gekoppelt ist, um die Winkel zu berechnen, unter denen die von jeder Station ausgesendeten Wellen ankommen, und um die geographische Position des Empfängers zu bestimmen.

**5.** Vorrichtung nach Anspruch 4, dadurch gekennzeichnet, daß jede Station $ST_i$ einen Funksendeposten (14) enthält, der über einen Schalter (15) an eine Interferometerbasis mit mehreren Antennen $A_k$ gekoppelt ist.

**6.** Verwendung des Verfahrens und der Vorrichtung nach einem beliebigen der Ansprüche 1 bis 5 für die Ortung von taktischen Fernmeldeposten im Feld, wobei die Ortung des Postens während der Funkstille des Postens erzielt werden kann.

**7.** Verwendung des Verfahrens und der Vorrichtung nach einem beliebigen der Ansprüche 1 bis 5 in einem geschützten Funknachrichtensystem, in dem die spezifischen Signale, die für die Ortung von Funkposten notwendig sind, im Frequenzevasionsmodus übertragen werden, um sie von den allgemeinen Fernmeldesignalen zu unterscheiden.

8

**8.** Verwendung des Verfahrens und der Vorrichtung nach einem beliebigen der Ansprüche 1 bis 5 für die Ortung von Funktelefonen.

**9.** Verwendung des Verfahrens nach einem beliebigen der Ansprüche 1 bis 5 zur Herstellung von Antikollisionssystemen für Flugzeuge.

FIG_1

FIG_2

FIG_3

POSITION MESSAGES

FIG_4

FIG_5

| ACQUISITION DES MESURES $\theta_{ti}$ | ~1 |

| RECEPTION DES INFORMATIONS CONTENUES DANS LE MESSAGE<br><br>-Position de la station<br>-$\sigma$<br>-$\alpha_i$<br>-$\theta_i$<br>-$\beta$ | ~2 |

| CALCUL DE $\theta$ ELEMENTAIRE AVEC CORRECTION | ~3 |

| CALCUL DE $\theta/1$ STATION<br>$\hat{\theta}, \sigma_\theta,$ Nbr éliminé | ~4 |

| FILTRAGE KALMAN<br><br>(entretien de la position) | ~5 |

## FIG_6

## FIG_7